(19) Europäisches Patentamt
European Patent Office
Office européen des brevets

(11) **EP 4 787 044 A1**

(12) **EUROPEAN PATENT APPLICATION**

(43) Date of publication:
**05.08.2026 Bulletin 2026/32**

(21) Application number: **25154600.8**

(22) Date of filing: **29.01.2025**

(51) International Patent Classification (IPC):
**G02B 13/22** (2006.01)     **G02B 21/18** (2006.01)
**G02B 21/36** (2006.01)

(52) Cooperative Patent Classification (CPC):
**G02B 13/22; G02B 21/18; G02B 21/362;
G02B 21/367**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **CSEM Centre Suisse d'Electronique et
de
Microtechnique SA
2002 Neuchâtel (CH)**

(72) Inventor: **Cristofolini, Peter
8753 Mollis (CH)**

(74) Representative: **Longchamp, Jean-Nicolas
DynamXIP GmbH
C/o Switzerland Innovation Park Basel Area
Site Novartis campus
Lichtstrasse 35
4056 Basel (CH)**

(54) **MULTI-VIEW IMAGING DEVICE AND MIRROR SYSTEM**

(57)     The present invention relates to a multi-view imaging device and a mirror system for a multi-view imaging device that enable the imaging of a sample under different angles at the same working distance.

Fig. 5

EP 4 787 044 A1

## Description

Technical Field

The present invention concerns the field of sample imaging, especially the fields of quality control by sample imaging and of optical microscopy. It relates, in particular, to a multi-view imaging device for imaging a sample under different angles at the same working distance, a mirror system for such a multi-view imaging device and the use of a transparent plate as an optical path length compensation element in a multi-view imaging device.

Background of the invention

For quality control applications, an object is often imaged from multiple viewpoints or angles. From the prior art, it is known that it is possible to combine these viewpoints on a single camera using a mirror system. For example, in CN209265169U, eight viewing angles of an object are combined on a single camera with an octagonal mirror system. In KR102620467A, four side views are combined on a camera with dome illumination. In CN111257323A, a small object is illuminated and imaged from multiple sides with an intricate mirror system on a single camera.

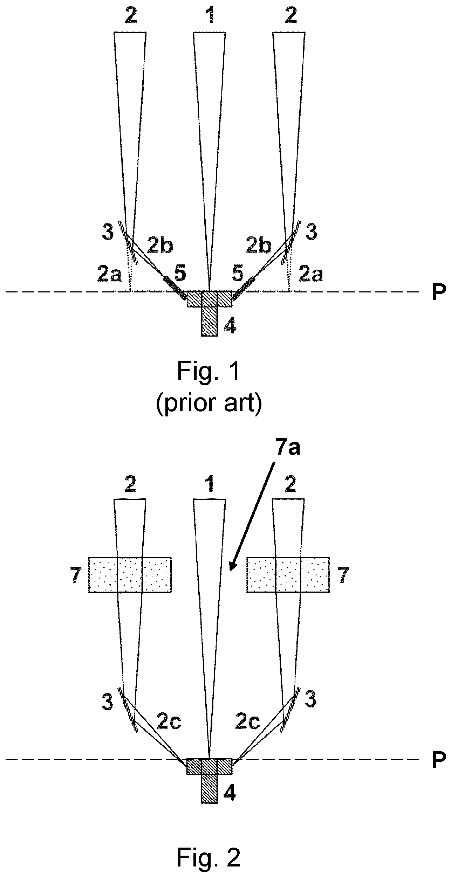

Often, it is particularly desired to image the object from the top and the sides onto the same camera. In such a case, the optical path length for the top view is usually shorter compared to the optical path length of the side views, due to the extra folding mirror in the side views (see Figure 1). Consequently, once the top view is in best focus, then the focus distance of the optics is too short in the side views. For cm-sized objects and medium resolution inspection, this is not a problem, both the top and the side views are reasonably well in focus, even with the small mismatch in working distance.

For the quality control applications of small objects, for instance objects with dimensions ranging from 0.1 to 10mm per side, high magnification images of the object with a top view and side views are often required. For example, for detecting fine scratches, a resolution on the object of 5 micrometre per camera pixel or better is required to image micrometre-sized scratches and dents on small parts. For high magnification applications, the depth of focus is however short, often less than a millimetre and the images of the top view and the side views are not in focus at the same working distance.

In known multi-view imaging devices, the focus mismatch of the side views is not corrected and therefore small objects cannot be simultaneously in focus in the top and the side view. There is therefore a need for a simple, cost-effective and adaptable multi-view imaging device that allows for imaging a sample under different angles at the same working distance on one camera sensor.

Summary of the invention

The object of the present invention is thus to propose a novel multi-view imaging device and a novel mirror system for a multi-view imaging device, with which the above-described drawbacks of the known devices are completely overcome or at least greatly diminished.

According to the present invention, these objects are achieved in particular through the elements of the independent claims. Advantageous embodiments follow moreover from the dependent claims and the description.

In a first aspect, the present invention addresses these limitations by introducing a multi-view imaging device that includes an optical path length compensation element. This element, positioned in the optical path between the sample and the mirrors or between the mirrors and the imaging lens, compensates for differences in optical path length between views obtained under different angles. This allows both the top and side views to be perfectly focused at the same working distance, resulting in sharper images of small objects.

The key advantage of this invention is its ability to provide highquality, focused images from multiple viewpoints on one camera sensor without the need for additional mechanical or electro-optical focusing mechanisms. This makes the multi-view imaging system more cost-effective, simpler, and more robust. Furthermore, the system can capture all views in perfect focus in a single image, eliminating the need for multiple consecutive images. This is particularly beneficial in applications where objects are continuously fed under the imaging system by a conveyor belt. The system also reduces hardware needs, as it does not require multiple camera lanes, image multiplexer boards, camera synchronization, or extra waiting times for recording and processing multiple images from different cameras.

More specifically, the objects of the present invention are, in the first aspect, achieved by a multi-view imaging device for imaging a sample located in a sample plane under different angles at the same working distance comprising at least one imaging lens, advantageously a telecentric lens, and a mirror system, wherein the mirror system comprises one or more mirrors angled with respect to the sample plane, and wherein the multi-view imaging device further comprises an optical path length compensation element positioned in the optical path between the sample and said one or more mirrors or between said one or more mirrors and said imaging lens to compensate for differences in optical path length between views obtained under different angles, especially to compensate for differences in optical path length between views obtained by said one or more mirrors and a view obtained directly by the imaging lens.

The multi-view imaging device is characterized by the inclusion of an optical path length compensation element. This element is positioned in the optical path between the sample and the one or more mirrors or between the one or more mirrors and the imaging lens. The purpose of the optical path length compensation element is to compensate for differences in optical path length between views obtained under different angles, in particular views obtained by the one or more mirrors and the view obtained directly by the imaging lens, allowing to have all these views in-focus at the same working distance, i.e. the distance between the top surface of the sample and the imaging lens. It is important to note that it is for space consideration advantageous to position the compensation element between the mirrors and the imaging lens. It is however alternatively or in addition possible to position the compensation element in the optical path of the side view(s) between the sample and the mirror. Furthermore, within the context of the present invention, the expression "one or more mirrors angled with respect to the sample plane" shall be understood to mean that the one or more mirrors are oriented at a nonzero angle relative to the sample plane.

The optical path length compensation element can be made from any transparent material, such as PMMA, polycarbonate, polystyrene, COC, optical glasses like borosilicate or fused silica, and even clear silicone, advantageously with smooth surfaces of optical quality. Optical quality means, in the present context, that a good quality image can be made looking through the compensation element onto the object. For this, the compensation element exhibits advantageously good transparency, homogeneous refractive index, surfaces with roughness Ra < 10nm, as few as possible dips and scratches on the surface, and as few as possible defects, cracks and inclusions in the material.

The multi-view imaging device can be used in a variety of applications, including but not limited to microscopy, quality control, and scientific research. By providing a means of capturing in-focus images of a sample from multiple angles at the same working distance, the multi-view imaging device allows for more comprehensive and accurate imaging of the sample, which can be crucial in these and other applications.

In one preferred embodiment of the first aspect of the present invention, the optical path length compensation element is a transparent plate made from at least one material having a refractive index between 1.2-2.0, advantageously between 1.3-1.7 or between 1.4-2.0.

The transparent plate serves to alter the path of light in a controlled manner, compensating for differences in optical path length between views obtained under different angles. The refractive index of the material from which the plate is made determines the degree to which the plate alters the path of light. By selecting a material with a refractive index within the specified range, the transparent plate can provide the necessary optical path length compensation.

The shape and size of the plate can be tailored to the specific requirements of the multi-view imaging device and can be easily adjusted to accommodate different sample sizes, working distances, or imaging angles.

The use of a transparent plate as the optical path length compensation element provides several advantages. For example, the plate can be easily manufactured and incorporated into the device and can provide reliable and consistent optical path length compensation. Furthermore, the plate can be easily cleaned or replaced if necessary, making it a practical and convenient choice for the optical path length compensation element.

In a further preferred embodiment of the first aspect of the present invention, the plate has a variable thickness in a direction parallel to the optical axis of said imaging lens, said thickness being greater in the optical path between the sample and the one or more mirrors or between the one or more mirrors and said imaging lens than along the optical axis of said imaging lens.

The variable thickness of the plate serves to adjust the optical path length in a controlled manner, compensating for differences in optical path length between views obtained under different angles. The increased thickness of the plate in the optical path between the sample and the mirrors or between the mirrors and the imaging lens allows to correct for the longer optical path length associated with the views obtained with the one or mirrors compared to the view obtained directly by the imaging lens.

The specific thickness profile of the plate can be tailored to the specific requirements of the multi-view imaging device and can be easily adjusted to accommodate different sample sizes, working distances, or imaging angles.

In another preferred embodiment of the first aspect of the present invention, the plate comprises multiple plate elements wherein at least some of the plate elements have different thicknesses or refractive indexes.

The use of multiple plate elements allows for a more precise control over the optical path length. By varying the thickness or refractive index of the individual plate elements, the optical path length can be adjusted in a highly controlled and precise manner. This can help to ensure that the optical path length is accurately compensated for, improving the quality and accuracy of the images captured by the device. The plate elements can be made from a variety of materials, including but not limited to glass, plastic, or any other transparent material with a suitable refractive index. The shape, size, and arrangement of the plate elements can be tailored to the specific requirements of the multi-view imaging device and can be easily adjusted to accommodate different sample sizes, working distances, or imaging angles. In particular, the different refractive indexes of the plate elements can advantageously be obtained by choosing different materials for the different elements.

In another preferred embodiment of the first aspect of the present invention, the plate comprises an aperture, for example a circular aperture, on the optical axis of the imaging lens. This aperture allows light to pass directly through the plate along the optical axis of the imaging lens, without being refracted or otherwise altered by the plate. This is particularly useful for views obtained directly by the imaging lens, as it ensures that these views are not affected by the plate.

The aperture can be of any shape that allows light to pass through unimpeded, although a circular shape may be particularly advantageous due to its symmetry. The size and position of the aperture can be tailored to the specific requirements of the multi-view imaging device and can be easily adjusted to accommodate different sample sizes, working distances, or imaging angles.

In other preferred embodiments of the first aspect of the present invention, the transparent plate comprises advantageously two refracting surfaces that are parallel to each other or two refracting surfaces that form diverging lens-like structures.

In a further preferred embodiment of the first aspect of the present invention, the plate forms multiple lens-like structures, wherein the lens-like structures have advantageously different optical power. The lens-like structures are designed to refract light passing through them, altering the path of the light in a controlled manner. By varying the optical power of the lens-like structures, the plate can provide more precise and effective optical path length compensation. This is particularly useful for views obtained under different angles, as it ensures that the optical path length for each of these views is accurately compensated for, improving the quality and accuracy of the images captured by the device. The shape, size, and arrangement of the lens-like structures can be tailored to the specific requirements of the multi-view imaging device and can be easily adjusted to accommodate different sample sizes, working distances, or imaging angles.

In another preferred embodiment of the present invention, the optical path length compensation element is tilted with respect to the optical axis of the imaging lens. This tilt, for instance of 0.1° to 20°, advantageously of approximately 5°, allows to remove back reflections from the inline illumination, which degrade image quality in the side views. The tilt angle of the optical path length compensation element can be adjusted to suit the specific requirements of the multi-view imaging device. For example, the tilt can be adjusted to accommodate different sample sizes, working distances, or imaging angles.

In another preferred embodiment of the first aspect of the present invention, the optical path length compensation element is mounted in a manner allowing for its exchangeable positioning. This means that the compensation element can be adjusted or changed as needed, providing a high degree of flexibility and adaptability. The exchangeable positioning of the optical path length compensation element can be achieved through a variety of means. For example, the compensation element could be mounted on a holder that allows for its exchange. Alternatively, the compensation element could directly be designed to be easily removed and replaced, allowing for different compensation elements to be used as needed. The ability to change the position of the optical path length compensation element allows, for instance, for the multi-view imaging device to be easily adapted to different sample sizes, working distances, or imaging angles.

In another preferred embodiment of the first aspect of the present invention, the device further comprises at least one first dark field illumination means with an illumination path tilted with respect to the optical axis of said imaging lens and/or one second illumination means with an illumination path parallel to the optical axis of said imaging lens.

Dark filed illumination means refer here to a system, device, or arrangement configured to provide illumination to an object in such a manner that the angles of the illumination rays to the optical axis of the imaging lens are larger than the acceptance angles of the imaging lens. Illumination rays that are specularly reflected (mirror reflection) from a flat sample perpendicular to the optical axis cannot thus make it through the imaging lens to the camera sensor. The dark field illumination means is designed to provide illumination that is tilted with respect to the optical axis of the imaging lens. This tilted illumination can help to highlight certain features of the sample that may not be visible under direct, or axial, illumination. For example, the tilted illumination can help to highlight surface features or irregularities, for example edges and scratches, that may be obscured under direct illumination.

The use of multiple illumination means, each with a different illumination path, provides several advantages. For example, it allows for more comprehensive and detailed imaging of the sample, as it allows for different features of the sample to be highlighted and analysed. It also allows to avoid certain specular reflections and therefore glare from some sample areas. Furthermore, it provides additional flexibility and control over the imaging process, as the illumination can be adjusted to suit the specific requirements of the sample or the imaging task.

In another preferred embodiment of the first aspect of the present invention, the mirror system is removably attached to the imaging device via attachment means. This allows for the mirror system to be easily removed and replaced as needed, providing a high degree of flexibility and adaptability. The attachment means can take a variety of forms, including but not limited to screws, clips, magnets, threads, or any other suitable fastening or attachment mechanism.

The ability to easily remove and replace the mirror system provides several advantages. For example, it allows for the multi-view imaging device to be easily adapted to different sample sizes, working distances, or imaging angles. Furthermore, it allows for the mirror system to be easily cleaned, repaired, or replaced, improving the longevity and reliability of the device.

In a further preferred embodiment of the first aspect of the present invention, the optical path length compensation element, and advantageously the dark field illumination means, are part of the mirror system. This integration of the compensation element, and advantageously the dark field illumination means, into the mirror system allows for a more compact and streamlined design, as it reduces the number of separate components that need to be incorporated into the multi-view imaging device. The specific design and arrangement of the compensation element within the mirror system can be tailored to the specific requirements of the multi-view imaging device and can be easily adjusted to accommodate different sample sizes, working distances, or imaging angles. Furthermore, it allows for a simpler exchange of the compensation element.

In the case of an imaging lens in the form of a telecentric imaging lens, the introduction of a different compensation plate (for instance with another thickness) does not affect the image location or magnification, there is no lateral shift or other adjustment necessary, because the plate is translation invariant. In the case of a conventional machine vision lens, the mirror system needs to be designed for the specific angular field of view that the imaging lens can accept.

In a second aspect, the present invention relates to a mirror system comprising attachment means for removable attachment to a multi-view imaging device, the mirror system comprising at least one or more mirrors and an optical path length compensation element, the mirror system being configured such that, when the mirror system is attached to said multi-view imaging device, the at least one or more mirrors are angled with respect to a sample plane of the multi-view imaging device, and the optical path length compensation element is positioned in the optical path between a sample located in said sample plane and said one or more mirrors or between said one or more mirrors and an imaging lens of said imaging device..

The one or more mirrors in the mirror system are angled to reflect light from the sample to the imaging lens from different angles. This allows the imaging device to capture images of the sample from multiple perspectives, providing a more comprehensive view of the sample.

The purpose of the optical path length compensation element is to compensate for differences in optical path length between views obtained under different angles, in particular views obtained by the one or more mirrors and the view obtained directly by the imaging lens, allowing to have all these views in-focus at the same working distance, i.e. the distance between the top surface of the sample and the imaging lens. Also here, it is important to note that for space consideration it is advantageous to position the compensation element between the mirrors and the imaging lens. It is however alternatively or in addition possible to position the compensation element in the optical path of the side view(s) between the sample and the mirror.

The optical path length compensation element can be made from any transparent material, such as PMMA, polycarbonate, polystyrene, COC, optical glasses like borosilicate or fused silica, and even clear silicone, advantageously with smooth surfaces of optical quality. Optical quality means, in the present context, that a good quality image can be made looking through the compensation element onto the object. For this, the compensation element exhibits advantageously good transparency, homogeneous refractive index, surfaces with roughness Ra < 10nm, as few as possible dips and scratches on the surface, and as few as possible defects, cracks and inclusions in the material.

The attachment means allow for the mirror system to be easily attached to and detached from the imaging device. This provides a high degree of flexibility, as it allows for the mirror system to be easily replaced or adjusted as needed. The attachment means can take a variety of forms, including but not limited to screws, clips, magnets, threads, or any other suitable fastening or attachment mechanism.

The mirror system can be used in a variety of applications, including but not limited to microscopy, quality control, and scientific research. By providing a means of capturing images of a sample from multiple angles, the mirror system allows for more comprehensive and accurate imaging of the sample, which can be crucial in these and other applications.

The invention also pertains, in a third aspect, to the use of a transparent plate made from a material having a refractive index between 1.2-2.0, advantageously between 1.3-1.7 or between 1.4-2.0, as an optical path length compensation element in a multi-view imaging device.

The plate serves to alter the path of light in a controlled manner, compensating for differences in optical path length between views obtained under different angles. By selecting a material with a refractive index within the specified range, the plate can provide the necessary optical path length compensation while minimizing any unwanted effects on the quality or accuracy of the images captured by the device.

The plate can be made from any transparent material, such as PMMA, polycarbonate, polystyrene, COC, optical glasses like borosilicate or fused silica, and even clear silicone, advantageously with smooth surfaces of optical quality. Optical quality means, in the present context, that a good quality image can be made looking through the plate onto the object. For this, the plate exhibits advantageously good transparency, homogeneous refractive index, surfaces with roughness Ra < 10nm, as few as possible dips and scratches on the surface, and as few as possible defects, cracks and inclusions in the material.

The use of a plate as the optical path length compensation element provides several advantages. For example, the plate can be easily manufactured and incorporated into multi-view imaging devices and can provide reliable and consistent optical path length compensation. Furthermore, the plate can be easily cleaned or replaced if necessary, making it a practical and convenient choice for the optical path length compensation element.

Brief description of the drawings

- Figure 1 illustrates the problem encountered when imaging a sample at high magnification with a multi-view imaging device known from the prior art;
- Figure 2 presents the principle underlying the present invention;
- Figures 3a and 3b present images of a sample obtained from a multi-view imaging device according to the present invention;
- Figure 4 presents one preferred embodiment of an imaging device according to the present invention; and
- Figures 5 presents one preferred embodiment of a mirror system according to the present invention.

Detailed description of a preferred embodiment

As already briefly described above, Figure 1 illustrates the problem encountered when imaging a small object 4, here as an example a small screw, with a multi-view imaging device capturing different perspectives of the object.

For the imaging, and particularly the quality control, of small objects 4, for instance objects with dimensions ranging from 0.1 to 10mm per side, high magnification images of the object 4, located in sample plane P, with a top view 1 and side views 2 is often required. For example, for detecting fine scratches, a resolution on the object of 5 micrometre per camera pixel or better is required to image micrometre-sized scratches and dents on small parts.

The multiple views on the object can be combined on a single camera with a mirror system, comprising several mirrors 3 angled with respect to the sample plane P, in front of the camera lens (not show in Figure 1). In the case of a top 1 and side views 2, the optical path for the top view 1 is shorter than the optical path of the side views 2, because of the extra folding mirror required for imaging the side views. There is an optical path length mismatch 5 in the side views 2 compared to the top view 1. The optical path for the sides views comprises thus the lengths 2b and 5 in comparison to the length 2a which would correspond to the optical path for a direct view without mirror. Therefore, the top view 1 and the side views 2 cannot be in focus at the same time, i.e. in the same sample plane P, thus at the same working distance between the top surface of the object 4 and the imaging lens. This is in particular a problem for high magnification applications, where the depth of focus is short, often less than a millimetre.

Figure 2 illustrates the principle underlying the present invention. By introducing optical path length compensation elements 7 in the optical paths between the mirrors 3 and the imaging lens (not shown in Figure 2), it is possible to increase the focus distance for the side views by a length Δz:

$$\Delta z = \frac{n-1}{n}\,t$$

Where $n$ is the index of refraction and $t$ the thickness of the compensation element. For example, a 10 mm thick borosilicate glass window with n =1.52 increases the focus distance by 3.4 mm. Advantageously, the compensation element takes the form of a transparent plate with an aperture 7a on the optical axis of the imaging lens so that the top view 1 is not transmitted through the plate material and hence acquires no focus distance extension. With the compensation elements 7, the top view 1 and the side views 2 can be imaged on the same focus plane, i.e. at the same working distance.

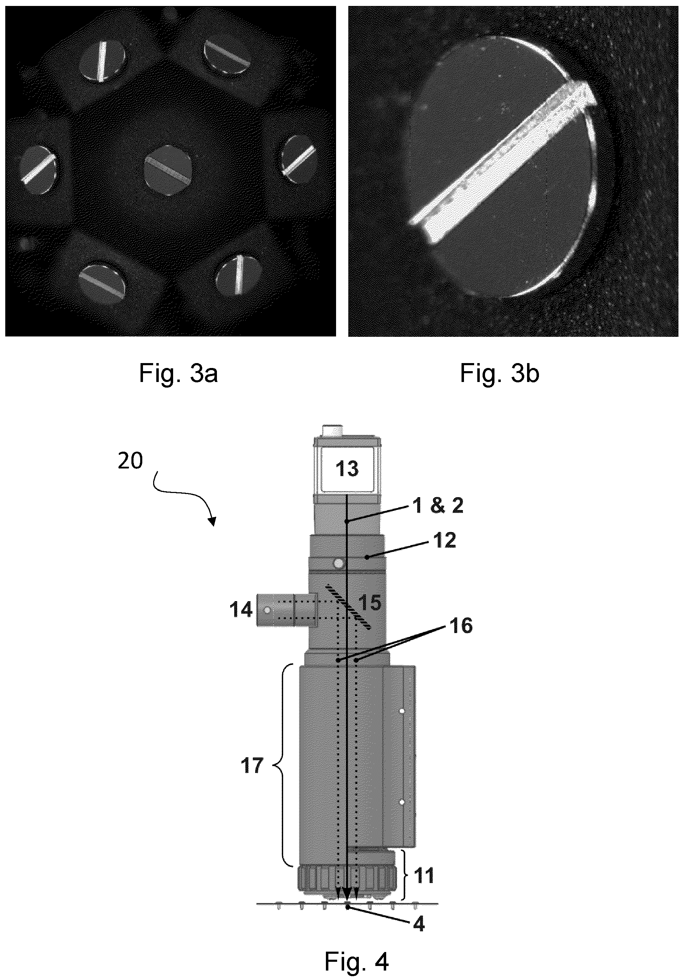

Figures 3a and 3b present images of a millimetre-sized screw viewed through a multi-view imaging device, according to the present invention, with dark field illumination for highlighting scratches and imperfections. Figure 3b is a zoom of the left-most view in Figure 3a, showing the scratches and imperfections on the surface and edges of the screw. As exemplified by these images, the top view and the side views of the screw can be obtained at the same focus distance (working distance) allowing the simultaneous imaging of the same objects from different perspectives.

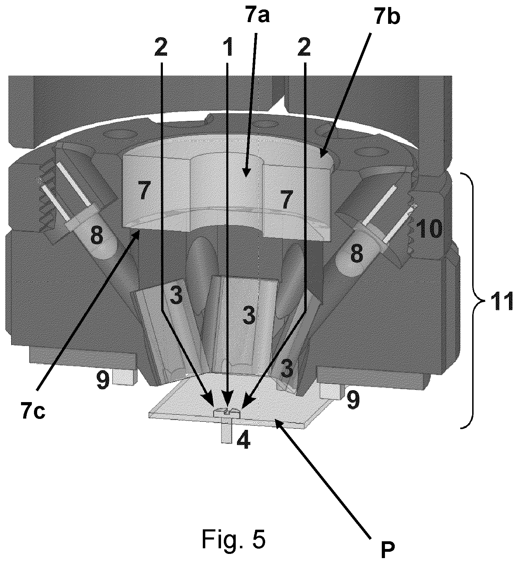

A schematic drawing of a multi-view imaging device 20 according to one preferred embodiment of the present invention is presented in Figure 4. The device comprises an imaging camera 13 with an imaging lens 12, here a telecentric lens, with inline (coaxial) illumination 16 of the object 4 from a first illumination mean 14, here an LED unit, via an integrated beam splitter 15. A mirror system 11, according to the present invention, is screwed on the rest of the device, advantageously with a thread 10 (see Figure 5). A mechanical support sleeve 17 connects the imaging system to a vertical translation stage, which is used to adjust the focus for the top view.

Figure 5 presents more details of the mirror system 11. The optical paths for the top view 1 and the side views 2 directions are indicated by arrows, going from the imaging optic (the imaging lens 12) to the inspection object 4. Between the optic 12 and the object 4, a compensation element in the form of a transparent plate 7 with an aperture 7a on the optical axis of the imaging lens 12 is placed, followed by an array of one or more mirrors for the side views 3, which divert the viewing direction. For dark field Illumination of the object 4, darkfield illumination LEDs 8 and extreme darkfield or edge illumination means 9 in form of a PCB with SMD LEDs are provided.

As already mentioned above, the mirror system is advantageously detachable from the main tube with a thread 10 and the focus compensation plate 7 is mounted such that it can easily be exchanged with a plate of different thickness or material, allowing for the imaging of differently sized or shaped objects.

In this embodiment of the invention, the mirrors 3 are tilted such that the side views 2 image the object at an angle of 45° with respect to the top view 1 direction, thus achieving isometric views. The plate 7 comprises in this particular embodiment two refracting surfaces 7b, 7c that are parallel to each other. However, the refracting surfaces could also form diverging lens-like structures, which can have different optical power.

**Claims**

1. A multi-view imaging device (20) for imaging a sample (4) located in a sample plane (P) under different angles at the same working distance comprising at least one imaging lens (12), advantageously a telecentric lens, and a mirror system (11), wherein the mirror system (11) comprises one or more mirrors (3) angled with respect to the sample plane (P),
**characterized in that**
the multi-view imaging device (20) further comprises an optical path length compensation element (7) positioned in the optical path between the sample (4) and said one or more mirrors or between said one or more mirrors (3) and said imaging lens (12) to compensate for differences in optical path length between views obtained under different angles, especially to compensate for differences in optical path length between views (2) obtained by said one or more mirrors and a view (1) obtained directly by the imaging lens.

2. The imaging device (20) according to claim 1, wherein the optical path length compensation element (7) is a transparent plate made from at least one material having a refractive index between 1.2-2.0, advantageously between 1.3-1.7 or between 1.4-2.0.

3. The imaging device (20) according to claim 2, wherein the plate (7) has a variable thickness in a direction parallel to the optical axis of said imaging lens (12), said thickness being greater in the optical path between the sample (4) and the one or more mirrors (3) or between the one or more mirrors (3) and said imaging lens than along the optical axis of said imaging lens (12).

4. The imaging device (20) according to claim 3, wherein the plate (7) comprises multiple plate elements and wherein at least some of the plate elements have different thicknesses or refractive indexes.

5. The imaging device (20) according to any one of the claims 2 to 4, wherein the plate (7) comprises an aperture (7a), for example a circular aperture, on the optical axis of the imaging lens.

6. The imaging device (20) according to any one of the claims 2 to 5, wherein the plate (7a) comprises two refracting surfaces (7b, 7c) that are parallel to each other.

7. The imaging device (20) according to any one of the claims 2 to 5, wherein the plate (7) comprises two refracting surfaces that form diverging lens-like structures.

8. The imaging device (20) according to claim 7, wherein the plate (7) forms multiple lens-like structures, wherein the lens-like structures have advantageously different optical power.

9. The imaging device (20) according to any one of the preceding claims, wherein the optical path length compensation element (7) is tilted with respect to the optical axis of the imaging lens (12).

10. The imaging device (20) according to any one of the preceding claims, wherein the optical path length compensation element (7) is mounted in a manner allowing for its exchangeable positioning.

11. The imaging device (20) according to any one of the preceding claims, comprising at least one first dark field illumination means (8, 9) with an illumination path tilted with respect to the optical axis of said imaging lens (12) and/or one second illumination means (14) with an illumination path (16) parallel to the optical axis of said imaging lens.

12. The imaging device (20) according to any one of the preceding claims, wherein the mirror system (11) is removably attached to the imaging device via attachment means (10).

13. The imaging device (20) according to claim 12, wherein the optical path length compensation element (7), and advantageously the dark field illumination means (8, 9), are part of the mirror system (11).

14. A mirror system (11) comprising attachment means (10) for removable attachment to a multi-view imaging device, the mirror system (11) comprising at least one or more mirrors (3) and an optical path length compensation element (7), the mirror system (11) being configured such that, when the mirror system (11) is attached to said multi-view imaging device, the at least one or more mirrors (3) are angled with respect to a sample plane (P) of the multi-view imaging device, and the optical path length compensation element (7) is positioned in the optical path between a sample (4) located in said sample plane (P) and said one or more mirrors (3) or between said one or more mirrors (3) and an imaging lens (12) of said imaging device.

15. Use of a transparent plate made from a material having a refractive index between 1.2-2.0, advantageously between 1.3-1.7 or between 1.4-2.0 as an optical path length compensation element in a multi-view imaging device.

Fig. 1
(prior art)

Fig. 2

Fig. 3a

Fig. 3b

Fig. 4

Fig. 5

Europäisches
Patentamt

European
Patent Office

Office européen
des brevets

# EUROPEAN SEARCH REPORT

**Application Number**

EP 25 15 4600

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/083399 A1 (TECHNICAL CO LTD [JP]; YAMAUCHI KAZUHIDE [JP] ET AL.) 9 September 2005 (2005-09-09) * paragraphs [0042], [0043], [0062]; figures 2, 3, 4(a), 9(a) * | 1-15 | INV. G02B13/22 G02B21/18 G02B21/36 |
| X | CN 112 098 420 B (HANGZHOU HIKROBOT TECH CO LTD) 10 October 2023 (2023-10-10) * paragraphs [0028] - [0033], [0039], [0040]; figures 3-6 * | 1-15 | |
| X | US 7 283 235 B2 (ISMECA SEMICONDUCTOR HOLDING [CH]) 16 October 2007 (2007-10-16) * Text related to figure 6; figure 6 * | 1,14,15 | |
| X | KR 101 525 700 B1 (SAMSUNG ELECTRO MECH [KR]) 3 June 2015 (2015-06-03) * Text related to figure 4; figure 4 * | 1,14,15 | |
| X | CN 115 343 292 A (LUSTER LIGHTTECH CO LTD ET AL.) 15 November 2022 (2022-11-15) * Text related to figure 4-5; figures 4-5 * | 1,14,15 | **TECHNICAL FIELDS SEARCHED (IPC)** G02B |
| X | KR 2009 0128612 A (HANMI SEMICONDUCTOR CO LTD [KR]) 16 December 2009 (2009-12-16) * Text related to figure 3; figure 3 * | 1,14,15 | |

The present search report has been drawn up for all claims

| Place of search | Date of completion of the search | Examiner |
|---|---|---|
| Munich | 16 July 2025 | Maria, Michaël |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

EP 4 787 044 A1

## ANNEX TO THE EUROPEAN SEARCH REPORT
## ON EUROPEAN PATENT APPLICATION NO.

EP 25 15 4600

This annex lists the patent family members relating to the patent documents cited in the above-mentioned European search report.
The members are as contained in the European Patent Office EDP file on
The European Patent Office is in no way liable for these particulars which are merely given for the purpose of information.

16-07-2025

| Patent document cited in search report | | | Publication date | Patent family member(s) | | | Publication date |
|---|---|---|---|---|---|---|---|
| WO 2005083399 | A1 | | 09-09-2005 | EP | 1720003 | A1 | 08-11-2006 |
| | | | | US | 2007279622 | A1 | 06-12-2007 |
| | | | | WO | 2005083399 | A1 | 09-09-2005 |
| CN 112098420 | B | | 10-10-2023 | NONE | | | |
| US 7283235 | B2 | | 16-10-2007 | AT | E432483 | T1 | 15-06-2009 |
| | | | | CN | 1723407 | A | 18-01-2006 |
| | | | | EP | 1602001 | A1 | 07-12-2005 |
| | | | | HK | 1083539 | A1 | 07-07-2006 |
| | | | | KR | 20050113602 | A | 02-12-2005 |
| | | | | MY | 135896 | A | 31-07-2008 |
| | | | | US | 2005185181 | A1 | 25-08-2005 |
| | | | | WO | 2004079427 | A1 | 16-09-2004 |
| KR 101525700 | B1 | | 03-06-2015 | CN | 104698010 | A | 10-06-2015 |
| | | | | KR | 101525700 | B1 | 03-06-2015 |
| CN 115343292 | A | | 15-11-2022 | NONE | | | |
| KR 20090128612 | A | | 16-12-2009 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 209265169 U
- KR 102620467 A

- CN 111257323 A